(19) Europäisches Patentamt
European Patent Office
Office européen des brevets

(11) EP 4 757 470 A1

(12) EUROPEAN PATENT APPLICATION
published in accordance with Art. 153(4) EPC

(43) Date of publication:
10.06.2026 Bulletin 2026/24

(21) Application number: 24849683.8

(22) Date of filing: 30.07.2024

(51) International Patent Classification (IPC):
H04W 72/231 (2023.01)    H04B 7/06 (2006.01)
H04W 72/232 (2023.01)    H04W 72/0453 (2023.01)
H04B 7/0413 (2017.01)    H04W 56/00 (2009.01)

(52) Cooperative Patent Classification (CPC):
H04B 7/0413; H04B 7/06; H04W 56/00;
H04W 72/0453; H04W 72/231; H04W 72/232

(86) International application number:
PCT/KR2024/095940

(87) International publication number:
WO 2025/029116 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.08.2023 KR 20230101197

(71) Applicant: LG Electronics Inc.
Yeongdeungpo-gu
Seoul 07336 (KR)

(72) Inventors:
• GO, Seongwon
  Seoul 06772 (KR)
• KANG, Jiwon
  Seoul 06772 (KR)
• PARK, Haewook
  Seoul 06772 (KR)

(74) Representative: Maikowski & Ninnemann
Patentanwälte Partnerschaft mbB
Postfach 15 09 20
10671 Berlin (DE)

(54) METHOD FOR TRANSMITTING/RECEIVING UPLINK SIGNAL, AND DEVICE THEREFOR

(57) A method according to an embodiment of the present disclosure comprises receiving configuration information related to a Timing Advance Group (TAG), and transmitting an uplink signal based on uplink time alignment related to the time alignment timer. The TAG includes two TAGs related to a serving cell. Based on that the time alignment timer related to one of the two TAGs expires and the time alignment timer related to the other TAG is running, operations for maintenance of the uplink time alignment are performed. The operations include a flush operation for at least one Hybrid Automatic Repeat Request (HARQ) buffer. The at least one HARQ buffer is related to the TAG of the expired time alignment timer.

【FIG. 3】

**Description**

[TECHNICAL FIELD]

The present disclosure relates to a method and device for transmitting and receiving an uplink signal.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CC/BWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. To support TRP-specific TA (i.e., to support two TAs for two TRPs), two TAGs may be configured within one serving cell.

[DISCLOSURE]

[TECHNICAL PROBLEM]

Two TAGs may be configured in a specific CC/BWP, and an operation for maintenance of uplink time alignment (e.g., HARQ buffer flush operation) may be performed based on a time alignment timer (TAT) for each TAG. According to the existing operation, when all the TATs for the two TAGs have expired, all HARQ buffers for all serving cells belonging to the two TAGs are flushed.

The number of HARQ processes for each serving cell is limited to a set/defined value (e.g., 16 or 32 for PUSCH), and each HARQ process is associated with the HARQ buffer. Considering the efficiency of operations related to the HARQ processes, the HARQ buffer flush operation needs to be performed even when the TAT for one of the two TAGs has expired.

However, the existing method does not define a HARQ buffer flush operation when some of the two TATs have expired/the range of HARQ buffer(s) to which the HARQ buffer flush operation is applied. Considering that uplink transmission operation based on unexpired TAT can be performed, it may be inefficient to flush all the HARQ buffers in the same manner as when all the TATs have expired.

An object of the present disclosure is to provide a method for supporting a HARQ buffer flush operation when the TAT for one of the two TAGs has expired.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) according to an embodiment of the present disclosure comprises receiving configuration information related to a Timing Advance Group (TAG), and transmitting an uplink signal based on uplink time alignment related to a time alignment timer.

A time alignment timer related to the TAG is configured based on the configuration information. The TAG includes two TAGs related to a serving cell.

Based on that the time alignment timer related to one of the two TAGs expires and the time alignment timer related to the other TAG is running, operations for maintenance of the uplink time alignment are performed.

The operations include a flush operation for at least one Hybrid Automatic Repeat Request (HARQ) buffer. The at least one HARQ buffer is related to the TAG of the expired time alignment timer.

The at least one HARQ buffer may be related to at least one HARQ process ID.

The at least one HARQ process ID may be related to a Transmission Configuration Indicator (TCI) state. The TCI state may be related to the TAG of the expired time alignment timer.

HARQ process IDs based on the number of HARQ processes may include i) first HARQ process IDs related to a first TCI state, and ii) second HARQ process IDs related to a second TCI state. The TCI state may be the first TCI state or the second TCI state.

The first TCI state may be related to a first COntrol REsource SET (CORESET) pool index, and the second TCI state may be related to a second CORESET pool index.

The operations may include a clear operation related to the TAG of the expired time alignment timer.

The TAG of the expired time alignment timer may be associated with a Transmission Configuration Indicator (TCI) state.

The TCI state may be a UL TCI state which is configured to be associated with a DL TCI state. The DL TCI state may be related to a configured downlink assignment.

The TAG of the expired time alignment timer may be related to a header of a higher layer message. The clear operation may be performed on a configured downlink assignment based on the higher layer message.

The clear operation may be related to at least one of i) a configured downlink assignment, ii) a configured uplink grant, and/or iii) a PUSCH resource for semi-persistent CSI reporting.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories. The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure comprises transmitting configuration information related to a Timing Advance Group (TAG) and receiving an uplink signal based on uplink time alignment related to a time alignment timer.

A time alignment timer related to the TAG is configured based on the configuration information. The TAG includes two TAGs related to a serving cell.

Based on that the time alignment timer related to one of the two TAGs expires and the time alignment timer related to the other TAG is running, operations for maintenance of the uplink time alignment are performed.

The operations include a flush operation for at least one Hybrid Automatic Repeat Request (HARQ) buffer. The at least one HARQ buffer is related to the TAG of the expired time alignment timer.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[ADVANTAGEOUS EFFECTS]

In the existing method, flushing of HARQ buffers is performed only when two time alignment timers for two TAGs expire. Therefore, if only the time alignment timer of one of the two TAGs expires, the HARQ buffer(s) related to the TAG are not flushed and maintained even though uplink transmission based on the TAG cannot be performed.

According to embodiments of the present disclosure, based on a time alignment timer related to one of two TAGs expiring, a flush operation for at least one HARQ buffer is performed. The at least one HARQ buffer is related to the TAG of the expired time alignment timer.

Accordingly, the efficiency of operation related to a HARQ process can be further improved compared to existing operations. Specifically, uplink transmission based on the remaining TAG related to the unexpired time alignment timer among the two TAGs can be additionally performed based on the HARQ buffer emptied by the flush operation.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.

FIG. 2 illustrates a timing advance command MAC CE according to an embodiment of the present disclosure.

FIG. 3 is a flowchart illustrating a method performed by a user equipment according to an embodiment of the present disclosure.

FIG. 4 is a flowchart illustrating a method performed by a base station according to another embodiment of the present disclosure.

FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. In this case, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used in resource 1 and the UL TCI state used in resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

<Meaning of TCI state/ beam indication>

In addition, in the methods proposed by the present disclosure below, a meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/space resource may mean estimating a channel from a DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may mean spatial relation info of the SRS resource which may be directly indicated by UL grant DCI or is indicated through the SRI field of the UL grant DCI.

Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be defined as follows.

Uplink Timing

Uplink frame number *i* for transmission from the UE shall start $T_{\mathrm{TA}} = \left( N_{\mathrm{TA}} + N_{\mathrm{TA,offset}} + N_{\mathrm{TA,adj}}^{\mathrm{common}} + N_{\mathrm{TA,adj}}^{\mathrm{UE}} \right) T_{\mathrm{c}}$ before the start of the corresponding downlink frame at the UE where

- $N_{\mathrm{TA}}$ and $N_{\mathrm{TA,offset}}$ are given by clause 4.2 of [5, TS 38.213], except for msgA transmission on PUSCH where $N_{\mathrm{TA}} = 0$ shall be used.

$N_{\mathrm{TA,adj}}^{\mathrm{common}}$ given by clause 4.2 of [5, TS 38.213] is derived from the higher-layer parameters TACommon, TACommonDrift, and TACommonDriftVariation if configured, otherwise $N_{\mathrm{TA,adj}}^{\mathrm{common}} = 0$; $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$.

The $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)

$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$N_{TA,offset}$

Case 1) Method of configuring a specific value per serving cell

For example, a UE may receive configuration information (e.g., ServingCellConfigCommon Information) including information on $N_{TA,offset}$ from a base station. The configuration information may be received based on RRC signaling. Table 1 below shows the configuration information.

【Table 1】

| – | *ServingCellConfigCommon* |
|---|---|
| The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync. | |

*ServingCellConfigCommon* **information element**

```
-- ASN1START
-- TAG-SERVINGCELLCONFIGCOMMON-START


ServingCellConfigCommon ::=          SEQUENCE {
    physCellId                                                    PhysCellId
```

| OPTIONAL,      -- Cond HOAndServCellAdd, | |
|---|---|
| downlinkConfigCommon | DownlinkConfigCommon |
| OPTIONAL,      -- Cond HOAndServCellAdd | |
| uplinkConfigCommon | UplinkConfigCommon |
| OPTIONAL,      -- Need M | |
| supplementaryUplinkConfig | UplinkConfigCommon |
| OPTIONAL,      -- Need S | |
| n-TimingAdvanceOffset | ENUMERATED  {  n0,  n25600,  n39936  } |
| OPTIONAL,      -- Need S | |
| (...) | |
| } | |
| -- TAG-SERVINGCELLCONFIGCOMMON-STOP | |
| -- ASN1STOP | |
| ***n-TimingAdvanceOffset*** | |
| The N_TA-Offset to be applied for all uplink transmissions on this serving cell. If the field is absent, the UE applies the value defined for the duplex mode and frequency range of this serving cell. See TS 38.133 [14], table 7.1.2-2. | |

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 2 below shows the value of $N_{TA,offset}$.

【Table 2】

| Table 7.1.2-2: The Value of $N_{TA\,offset}$ | |
| --- | --- |
| **Frequency range and band of cell used for uplink transmission** | $N_{TA\,offset}$ **(Unit: T$_C$)** |
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |
| [1] Note 1: The UE identifies $N_{TA\,offset}$ based on the information n-TimingAdvanceOffset as specified in TS 38.331 [2]. If UE is not provided with the information n-TimingAdvanceOffset, the default value of $N_{TA\,offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TA\,offset}$ can also be provided for a FDD serving cell.<br>[2] Note 2: Void | |

$N_{TA}$

Case 1) Method of configuring through a random access response (RAR)

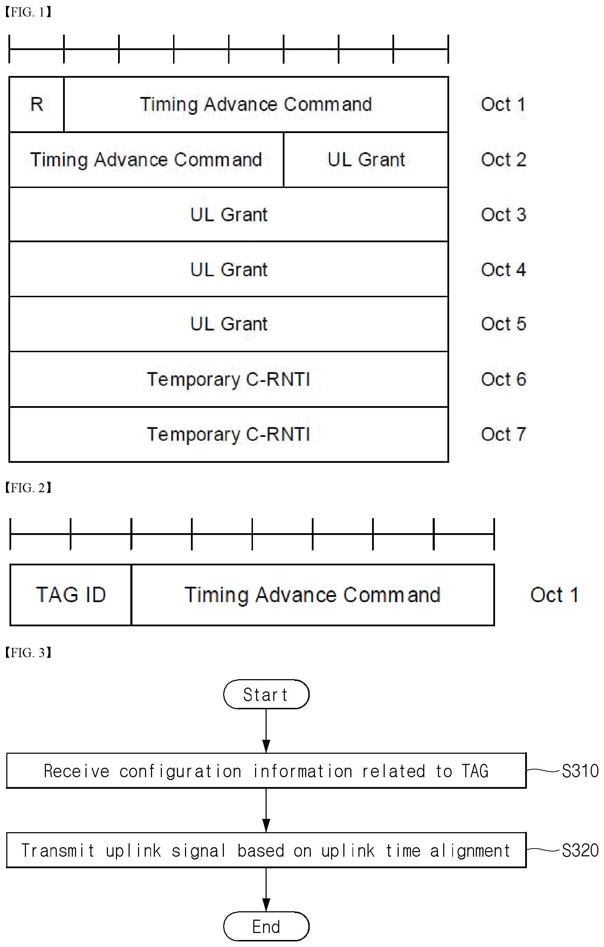

For example, in a random access procedure (e.g., 2-step RACH procedure or 4-step RACH procedure), a UE may receive an RAR from a base station. NTA may be determined/configured based on the RAR. Specifically, the RAR may include a timing advance command. The timing advance command indicates an index value (e.g., index value TA) related to timing adjustment. NTA may be determined based on the index value. The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. MAC payload of the MAC RAR is described in detail below.

6.2.3 MAC payload for Random Access Response

The MAC RAR is of fixed size as depicted in Figure 6.2.3-1, and consists of the following fields:

- R: Reserved bit, set to 0;
- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;
- Timing Advance Command: The Timing Advance Command field indicates the index value TA used to control the amount of timing adjustment that the MAC entity has to apply in TS 38.213 [6]. The size of the Timing Advance Command field is 12 bits;
- UL Grant: The Uplink Grant field indicates the resources to be used on the uplink in TS 38.213 [6]. The size of the UL Grant field is 27 bits;
- Temporary C-RNTI: The Temporary C-RNTI field indicates the temporary identity that is used by the MAC entity during Random Access. The size of the Temporary C-RNTI field is 16 bits.

The MAC RAR is octet aligned.

Transmission timing adjustments based on the timing advance command are described below.

4.2 Transmission timing adjustments

A UE can be provided a value $N_{TA,offset}$ of a timing advance offset for a serving cell by n-TimingAdvanceOffset for the serving cell. If for a serving cell the UE is provided two coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset and n-TimingAdvanceOffset2 for transmissions with TCI states associated with the first and second CORESETs, respectively. A UE can be provided a second $N_{TA,offset}$ value for transmissions with spatial domain filters corresponding to TCI states associated with physCellId different from physCellId for the serving cell in addition to a first $N_{TA,offset}$ value for transmissions with spatial domain filters corresponding to TCI states associated with physCellId for the serving cell. The first and second $N_{TA,offset}$ values correspond to first and second TAGs [11, TS 38.321] having an association indicated by tag-Id-ptr with first and second joint TCI states provided by dl-OrJointTCI-StateList or first and second UL TCI states provided by ul-TCI-State-List. If the UE is not provided n-TimingAdvanceOffset for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.

For a band with synchronous contiguous intra-band EN-DC in a band combination with non-applicable maximum transmit timing difference requirements as described in Note 1 of Table 7.5.3-1 of [10, TS 38.133], if the UE indicates ul-TimingAlignmentEUTRA-NR as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^{\mu} \cdot 15$ kHz, the timing advance command for a TAG indicates the change of the uplink timing relative to the current uplink timing for the TAG in multiples of $16 \cdot 64 \cdot T_c/2^{\mu}$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A = 0, 1, 2, ..., 3846$, where an amount of the time alignment for the TAG with SCS of $2^{\mu} \cdot 15$ kHz is $N_{TA} = T_A \cdot 16 \cdot 64/2^{\mu}$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A = 0, 1, 2, ..., 63$, where for a SCS of $2^{\mu} \cdot 15$ kHz, $N_{TA\_new} = N_{TA\_old} + (T_A - 31) \cdot 16 \cdot 64/2^{\mu}$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot $n + k + 1 + 2^{\mu} \cdot K_{offset}$ where $k = \left\lceil N_{slot}^{subframe,\mu} \cdot \left( N_{T,1} + N_{T,2} + N_{TA,max} + 0.5 \right)/T_{sf} \right\rceil$, $N_{T,1}$ is a time duration in msec of $N_1$ symbols corresponding to a PDSCH processing time for UE processing capability 1 when additional PDSCH DM-RS is configured, $N_{T,2}$ is a time duration in msec of $N_2$ symbols corresponding to a PUSCH preparation time for UE processing capability 1 [6, TS 38.214], $N_{TA,max}$ is the maximum timing advance value in msec that can be provided by a TA command field of 12 bits, $N_{\text{slot}}^{\text{subframe},\mu}$ is the number of slots per subframe, $T_{\text{sf}}$ is the subframe duration of 1 msec, and $K_{\text{offset}} = K_{\text{cell,offset}} - K_{\text{UE,offset}}$, where $K_{\text{cell,offset}}$ is provided by cellSpecificKoffset and $K_{\text{UE,offset}}$ is provided by a Differential Koffset MAC CE command [11, TS 38.321]; otherwise, if not respectively provided, $K_{\text{cell,offset}} = 0$ or $K_{\text{UE,offset}} = 0$. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{\text{slot}}^{\text{subframe},\mu}$ are determined with respect to the minimum SCS among the SCSs of all configured UL BWPs for all uplink carriers in the TAG. $N_{\text{TA,max}}$ is determined with respect to the minimum SCS among the SCSs of all configured UL BWPs for all uplink carriers in the TAG and for all configured initial UL BWPs provided by initialUplinkBWP. The uplink slot n is the last slot among uplink slot(s) overlapping with the slot(s) of PDSCH reception assuming $T_{TA} = 0$, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{\text{TA}}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates larger-thanCP-capability. If a UE indicates XYZ_capability, is provided SRS-autonomousTAupdate [10, TS 38.133], and transmits SRS based on a configuration by SRS-PosResourceSet in SRS-PosRRC-InactiveConfig-ValidityArea in RRC_INACTIVE state, the UE may autonomously update $N_{\text{TA}}$ at cell reselection; else, if the UE is not provided SRS-autonomousTAupdate, the UE maintains the $N_{\text{TA}}$ of a last serving cell prior to the release of a dedicated RRC connection [11, TS 38.321].

For operation with single TAG on a serving cell, if two adjacent slots overlap due to a TA command, the latter slot is reduced in duration relative to the former slot. The UE does not change $N_{\text{TA}}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted. The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. A payload of the timing advance command MAC CE is described in detail below.

6.1.3.4 Timing Advance Command MAC CE

The Timing Advance Command MAC CE is identified by MAC subheader with LCID as specified in Table 6.2.1-1.

It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;
- Timing Advance Command: This field indicates the index value TA (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.

It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;
- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;
- R: Reserved bit, set to 0.

TAG (Timing advance group)

The timing advance group (TAG) refers to a group of serving cells that use the same timing advance value. Table 3 below shows definition of the TAG and configuration information related to the TAG.

【Table 3】

| |
| --- |
| **Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs. |

*TAG-Config*

The IE *TAG-Config* is used to configure parameters for a time-alignment group.

<div align="center">

***TAG-Config* information element**

</div>

```
-- ASN1START
-- TAG-TAG-CONFIG-START


TAG-Config ::=                          SEQUENCE {
    tag-ToReleaseList                        SEQUENCE (SIZE (1..maxNrofTAGs)) OF TAG-Id
OPTIONAL,    -- Need N
    tag-ToAddModList                         SEQUENCE (SIZE (1..maxNrofTAGs)) OF TAG
OPTIONAL    -- Need N
}


TAG ::=                          SEQUENCE {
    tag-Id                           TAG-Id,
    timeAlignmentTimer               TimeAlignmentTimer,
    ...
}


TAG-Id ::=                          INTEGER (0..maxNrofTAGs-1)
```

| |
| --- |
| ***tag-Id*** <br> Indicates the TAG of the SpCell or an SCell, see TS 38.321 [3]. Uniquely identifies the TAG within the scope of a Cell Group (i.e. MCG or SCG). |
| ***timeAlignmentTimer*** <br> The timeAlignmentTimer for TAG with ID tag-Id, as specified in TS 38.321 [3]. |
| **maxNrofTAGs**     INTEGER ::= 4 -- Maximum number of Timing Advance Groups |

Procedure

Operations for uplink time alignment are described in detail below.

5.2 Maintenance of Uplink Time Alignment

RRC configures the following parameters for the maintenance of UL time alignment:

- timeAlignmentTimer (per TAG) which controls how long the MAC entity considers the Serving Cells belonging to the associated TAG to be uplink time aligned;
- inactivePosSRS-TimeAlignmentTimer which controls how long the MAC entity considers the Positioning SRS transmission in RRC_INACTIVE in clause 5.26 to be uplink time aligned;
- cg-SDT-TimeAlignmentTimer which controls how long the MAC entity considers the uplink transmission for CG-SDT to be uplink time aligned.

The MAC entity shall:

1> when a Timing Advance Command MAC CE is received, and if an NTA (as defined in TS 38.211 [8]) has been maintained with the indicated TAG:

    2> apply the Timing Advance Command for the indicated TAG;
    2> if there is ongoing Positioning SRS Transmission in RRC_INACTIVE as in clause 5.26:
    3> start or restart the inactivePosSRS-TimeAlignmentTimer associated with the indicated TAG.
    2> if CG-SDT procedure triggered as in clause 5.27 is ongoing:

        3> start or restart the cg-SDT-TimeAlignmentTimer associated with the indicated TAG.

    2> else:

        3> start or restart the timeAlignmentTimer associated with the indicated TAG.

1> when a Timing Advance Command is received in a Random Access Response message for a Serving Cell belonging to a TAG or in a MSGB for an SpCell:

    2> if the Random Access Preamble was not selected by the MAC entity among the contention-based Random Access Preamble:

        3> apply the Timing Advance Command for this TAG;
        3> start or restart the timeAlignmentTimer associated with this TAG.

    2> else if the timeAlignmentTimer associated with this TAG is not running:

        3> apply the Timing Advance Command for this TAG;
        3> start the timeAlignmentTimer associated with this TAG;
        3> when the Contention Resolution is considered not successful as described in clause 5.1.5; or
        3> when the Contention Resolution is considered successful for SI request as described in clause 5.1.5, after transmitting HARQ feedback for MAC PDU including UE Contention Resolution Identity MAC CE:

            4> stop timeAlignmentTimer associated with this TAG.

        3> when the Contention Resolution is considered not successful as described in clause 5.1.5:

            4> if CG-SDT procedure triggered as in clause 5.27 is ongoing:

                5> set the NTA value to the value before applying the received Timing Advance Command as in TS 38.211 [8].

        3> when the Contention Resolution is considered successful for Random Access procedure while the CG-SDT procedure is ongoing:

> 4> stop timeAlignmentTimer associated with this TAG;
> 4> start or restart the cg-SDT-TimeAlignmentTimer associated with this TAG.

> 3> when the Contention Resolution is considered successful for Random Access procedure while SRS transmission in RRC_INACTIVE is ongoing:

> > 4> start or restart the inactivePosSRS-TimeAlignmentTimer associated with this TAG.

> 2> else:

> > 3> ignore the received Timing Advance Command.

1> when an Absolute Timing Advance Command is received in response to a MSGA transmission including C-RNTI MAC CE as specified in clause 5.1.4a:

> 2> apply the Timing Advance Command for PTAG;
> 2> if there is ongoing Positioning SRS Transmission in RRC_INACTIVE as in clause 5.26:

> > 3> start or restart the inactivePosSRS-TimeAlignmentTimer associated with the indicated TAG.

> 2> if CG-SDT procedure is ongoing:

> > 3> start or restart the cg-SDT-TimeAlignmentTimer associated with PTAG.

> 2> else:

> > 3> start or restart the timeAlignmentTimer associated with PTAG.

1> when the indication is received from upper layer for stopping the inactivePosSRS-TimeAlignmentTimer:

> 2> stop the inactivePosSRS-TimeAlignmentTimer.

1> when the indication is received from upper layer for starting the inactivePosSRS-TimeAlignmentTimer:

> 2> start or restart the inactivePosSRS-TimeAlignmentTimer.

1> when instruction from the upper layer has been received for starting the cg-SDT-TimeAlignmentTimer:

> 2> start the cg-SDT-TimeAlignmentTimer.

1> when instruction from the upper layer has been received for stopping the cg-SDT-TimeAlignmentTimer:

> 2> consider the cg-SDT-TimeAlignmentTimer as expired.

1> when instruction from the upper layer has been received for starting the TimeAlignmentTimer associated with PTAG:

> 2> start the TimeAlignmentTimer associated with PTAG.

1> when a timeAlignmentTimer expires:

> 2> if the timeAlignmentTimer is associated with the PTAG:

> > 3> flush all HARQ buffers for all Serving Cells;
> > 3> notify RRC to release PUCCH for all Serving Cells, if configured;
> > 3> notify RRC to release SRS for all Serving Cells, if configured;

3> clear any configured downlink assignments and configured uplink grants;

3> clear any PUSCH resource for semi-persistent CSI reporting;

3> consider all running timeAlignmentTimers as expired;

3> maintain NTA (defined in TS 38.211 [8]) of all TAGs.

2> else if the timeAlignmentTimer is associated with an STAG, then for all Serving Cells belonging to this TAG:

3> flush all HARQ buffers;

3> notify RRC to release PUCCH, if configured;

3> notify RRC to release SRS, if configured;

3> clear any configured downlink assignments and configured uplink grants;

3> clear any PUSCH resource for semi-persistent CSI reporting;

3> maintain NTA (defined in TS 38.211 [8]) of this TAG.

1> when the inactivePosSRS-TimeAlignmentTimer expires:

2> notify RRC to release Positioning SRS for RRC_INACTIVE configuration(s).

1> when the cg-SDT-TimeAlignmentTimer expires:

2> clear any configured uplink grants;

2> if a PDCCH addressed to the MAC entity's C-RNTI after initial transmission for the CG-SDT with CCCH message has not been received:

3> consider ongoing CG-SDT procedure as terminated;

3> indicate the expiry of cg-SDT-TimeAlignmentTimer to the upper layer.

2> flush all HARQ buffers;

2> maintain NTA (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired.

The MAC entity shall not perform any uplink transmission on a Serving Cell except the Random Access Preamble and MSGA transmission when the timeAlignmentTimer associated with the TAG to which this Serving Cell belongs is not running, CG-SDT procedure is not ongoing or SRS transmission in RRC_INACTIVE as in clause 5.26 is not on-going.

Furthermore, when the timeAlignmentTimer associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the cg-SDT-TimeAlignmentTimer is not running during the ongoing CG-SDT procedure as triggered in clause 5.27. The MAC entity shall not perform any uplink transmission except the Random Access Preamble and MSGA transmission when inactivePosSRS-TimeAlignmentTimer is not running during the procedure for SRS transmission in RRC_INACTIVE as in clause 5.26.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, timing advance (TA) setting for UE uplink transmission of the base station to compensate for the propagation delay between the base station and the UE may be performed through higher layer signaling. Further, a TA for a specific group of cell(s) may be set/managed separately through a concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a correlation between the plurality of TA values and UE UL channel/RS is performed. As described in Rel-18 MIMO WID objective (RP-213598) of Table 4 below, the configuration of TA values for multi-DCI (M-DCI) based M-TRP operation is considered.

[Table 4]

| 5. Study, and if justified, specify the following |
|---|
| - Two TAs for UL multi-DCI for multi-TRP operation |
| - Power control for UL single DCI for multi-TRP operation where unified TCI framework extension in objective 2 is assumed. |
| For the case of simultaneous UL transmission from multiple panels, the operation will only be limited to the objective 6 scenarios. |

Here, the TA (TA value) may be based on the description of FIG. 2 and the contents described in the timing advance (TA) related procedure described above.

In RAN1 and RAN2 standards prior to Rel-18, the base station manages UE TA values through values called NTA and NTA,offset. The base station may set NTA as follows. The base station may i) set NTA via RAR MAC CE or ii) set NTA via timing advance command MAC CE (TA command MAC CE). In addition, the base station may utilize the concept of the Timing Advance Group (TAG) to configure up to 4 TAGs per UE for a specific cell or cell combination and perform update/management of an NTA value for each TAG.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In Rel-18 MIMO, an agreement is reached regarding two TAs, as shown in Table 5 below.

[Table 5]

| **Agreement** |
|---|
| Enhancements on two TAs for UL multi-DCI for multi-TRP operation are applicable to both FR1 and FR2. |
| **Agreement** |
| For multi-DCI based multi-TRP operation with two TAs, support configuring two TAGs belonging to a serving cell. |
| **Agreement** |
| For multi-DCI multi-TRP operation with two TAs, up to two n-TimingAdvanceOffset value per serving cell is supported |
| **Agreement** |
| For multi-DCI multi-TRP operation with two TAs in a CC, two DL reference timings are supported where each DL reference timing is associated with one TAG |
|    • baseline assumption is that the Rx timing difference between the two DL reference timings is no larger than CP length |
|    • as an optional UE capability, Rx timing difference between the two DL reference timings can be assumed to be larger than CP length |
|      • FFS: the maximum Rx timing difference (could be up to RAN4) |
|      • Other than UE capability details and relevant configuration, no additional RAN1 specification enhancement specific for this case is expected |
| **Agreement** |

(continued)

| |
|---|
| Multi-DCI multi-TRP operation with two TAs is supported for Rel-15/16/17 TCI frameworks and unified TCI framework extension discussed in 9.1.1.1 as well as UL beam indication via spatial relation. |
| **Agreement**<br>For associating TAGs to target UL channels/signals for multi-DCI based multi-TRP operation, support the following:<br>Associate TAG to TCI-state<br>    • Associate TAG ID with UL/joint TCI state<br>    • For UL transmission, the TAG ID associated with the UL/joint TCI state is utilized<br>    • A baseline is UE expects that the [activated] UL/joint TCI states [of UL signals/channels] associated to one CORESET Pool Index correspond to one TAG<br>    • Working Assumption: A UE may report that it supports that the [activated] UL/joint TCI states [of UL signals/channels] associated to one CORESETPoolIndex correspond to both TAGs<br>FFS: on how to handle association when Rel-15/16 spatial relation framework is used for<br>    • PUCCH<br>    • DG/CG Type 1/Type 2 PUSCH<br>    • AP/SP/P SRS |
| **Agreement**<br>For associating TAGs to target UL channels/signals for multi-DCI based multi-TRP operation, the baseline feature is revised as follows:<br>    • UE expects that the UL/joint TCI states of UL signals/channels associated to one CORESET Pool Index correspond to one TAG<br>    • Association of TAG ID with UL/joint TCI state is via RRC configuration |
|         ■ Above does not impact the association of the indicated TCI states and coresetPoolIndex values as agreed in previous meetings in 9.1.1.1. |

As described above, it was discussed that two TAGs can be configured to manage two TA values in one serving cell, and it was also agreed that a reference timing to apply the TA value managed in each TAG would support two DL reference timings in one serving cell.

In addition, it was agreed that the PDCCH ordered CFRA mechanism would be utilized for the two TA acquisitions. Discussions were held about uplink resources and a correlation between the two TAs as to which uplink transmissions the two acquired TAs (TAGs) should be utilized for. As a result, it was agreed to associate the TAG ID with the UL and/or joint TCI state (via RRC signaling) for the association between the two TAGs configured within the serving cell and the UL channel/RS, as in the agreement. The remaining issue is how to perform TRP/TAG-specific TAT management.

Specifically, as two TAGs are configured in a specific CC/BWP of a UE, a time alignment timer (TAT) may be managed for each TAG. According to the legacy TAT management operation, as a specific TAT is related to PTAG/STAG, an out-of-synch operation may be performed on all cells of the UE, or the out-of-synch operation may be performed on all cells related to the corresponding STAG. The out-of-synch operation may include the operations according to Table 6 below. Specifically, the out-of-synch operation may include a flush operation of a HARQ buffer, a release operation for PUCCH/SRS, a clear operation for configured DL/UL assignments, etc.

However, in Rel-18, if two TATs are managed within a specific CC/BWP, there is ambiguity as to what action a UE should take when a TAT related to a specific TAG expires. In particular, problems arise as to i) which HARQ buffer to flush, ii) which PUCCH/SRS resource to release, and iii) which PUSCH resource including any configured DL assignments and configured uplink grants and semi-persistent CSI reporting to clear.

[Table 6]

| |
|---|
| 1> when a *timeAlignmentTimer* expires:<br>    2> if the *timeAlignmentTimer* is associated with the PTAG:<br>        3> flush all HARQ buffers for all Serving Cells;<br>        3> notify RRC to release PUCCH for all Serving Cells, if configured;<br>        3> notify RRC to release SRS for all Serving Cells, if configured;<br>        3> clear any configured downlink assignments and configured uplink grants;<br>        3> clear any PUSCH resource for semi-persistent CSI reporting;<br>        3> consider all running *timeAlignmentTimers* as expired; |

(continued)

> 3> maintain $N_{TA}$ (defined in TS 38.211 [8]) of all TAGs.
> 2> else if the *timeAlignmentTimer* is associated with an STAG, then for all Serving Cells belonging to this TAG:
> > 3> flush all HARQ buffers;
> > 3> notify RRC to release PUCCH, if configured;
> > 3> notify RRC to release SRS, if configured;
> > 3> clear any configured downlink assignments and configured uplink grants;
> > 3> clear any PUSCH resource for semi-persistent CSI reporting;
> > 3> maintain $N_{TA}$ (defined in TS 38.211 [8]) of this TAG.

The present disclosure proposes a method of managing TAG-specific time alignment timer (TAT) of a UE when multiple TAs are suppported in a specific CC/BWP(s) of the UE.

In the present disclosure, "/" may be interpreted as "and," "or," or "and/or" depending on the context.

Problem 1

If a time alignment timer (TAT) is managed for each TAG as two TAGs are configured in a specific CC/BWP of a UE, there is ambiguity as to which HARQ process number/ID (hereinafter referred to as HARQ ID) within the CC/BWP a flush operation should be performed on when a specific TAT expires. A method for solving the problem 1 is described in detail below.

Proposal 1

A method of configuring/linking/mapping a Hybrid Automatic Repeat reQuest (HARQ) ID and a specific TAG or/and CORESET pool index may be considered. This is described in detail below.

HARQ IDs may be determined based on a configured maximum number (e.g., nrofHARQ-Processes) in a specific CC/BWP of a UE. For example, in a terrestrial network (TN), up to 16 HARQ IDs may be determined. For example, in a non-terrestrial network (NTN), up to 32 HARQ IDs may be determined. One or more HARQ IDs may be configured/linked/mapped to a specific TAG and/or CORESET pool index. For example, the one or more HARQ IDs may be related to a TCI state. The TCI state may be associated with a specific TAG. The TCI state may be associated with one CORESET pool index.

The configuring/linking/mapping may be performed by higher layer signaling (e.g., RRC, MAC) of a base station.

For example, HARQ IDs 0 to 7 may be linked to TAG ID 0 or/and CORESET pool index 0, and HARQ IDs 8 to 15 may be linked to TAG 1 or/and CORESET pool index 1. As a specific example, the HARQ IDs 0 to 7 may be linked to a first TCI state (associated with the TAG ID 0), and the HARQ IDs 8 to 15 may be linked to a second TCI state (associated with the TAG ID 1).

For example, the HARQ ID may be configured/determined/assigned based on the TAG or/and the CORESET pool index. That is, the HARQ ID may not be configured/determined for a specific CC/BWP. Specifically, the HARQ IDs may be separately configured/assigned for a specific TAG or/and the CORESET pool index. Hence, an explicit correlation between the TAG or/and the CORESET pool index and the HARQ ID may be established. In this case, only the HARQ ID related to a specific CORESET pool index may be indicated based on a 4-bit HARQ process number field (e.g., 5-bit HARQ process number field in the NTN) of DCI related/associated with the specific CORESET pool index. That is, the interpretation of a HARQ process number field of specific DCI may vary based on the specific DCI being transmitted in a CORESET related to which CORESET pool index. Accordingly, up to 16 HARQ IDs may be utilized for each CORESET pool based on up to 4-bit field related to each CORESET pool. In the NTN, up to 32 HARQ IDs may be utilized for each CORESET pool based on up to 5-bit field.

For example, it may be assumed that only up to 16 HARQ IDs (up to 32 HARQ IDs in the NTN) are used within a specific CC/BWP according to the existing legacy standard. In this case, a method of distributing and utilizing HARQ IDs to CORESET pools may be considered. Specifically, 8 HARQ IDs (16 HARQ IDs in the NTN) may be utilized in each CORESET pool. According to the present embodiment, DCI payload can be saved by configuring the HARQ process number field of the DCI with 3 bits (4 bits in the NTN).

According to the above-described embodiments, when a TAT of a specific TAG among the two TAGs configured in the CC/BWP expires, the UE may perform a flush operation for the HARQ ID configured/linked/mapped to the corresponding TAG ID (or/and the CORESET pool index implicitly associated/related to the corresponding TAG). That is, in the above example, when the TAT for TAG ID 0 expires, the UE may perform a flush operation for the HARQ IDs 0 to 7.

According to the above-described embodiments, the following effects are obtained.

If the UE enters an out-of-synch phase with a specific TAG/TRP due to expiration of a TAT related to the TAG/TRP, the UE can (explicitly) flush the HARQ IDs related to the TAG/TRP without ambiguity.

Problem 2

If a time alignment timer (TAT) is managed for each TAG as two TAGs are configured in a specific CC/BWP of a UE, related ambiguity may arise as to an operation performed when a specific TAT expires. For example, it may be ambiguous as to which PUCCH/SRS resource the UE should release within the CC/BWP. For example, it may be ambiguous as to which configured DL assignment and UL grant the UE should clear within the CC/BWP. For example, it may be ambiguous as to which PUSCH resource for semi-persistent CSI reporting the UE should clear within the CC/BWP. A method for solving the problem 2 is described in detail below.

Proposal 2

When a TAT of a specific TAG among two TAGs configured within a CC/BWP expires, a UE may perform the above-described release/clear operation as follows.

For example, the release/clear operation may be performed on UL resources (e.g., PUCCH/SRS, configured UL grant, PUSCH including semi-persistent CSI reporting, etc.) related/associated to a TCI state associated with the specific TAG. The TCI state associated with the specific TAG may refer to a TCI state configured with an ID of the specific TAG via RRC signaling. The TCI state may include a DL/UL joint TCI state and/or a UL TCI state.

The UL resources related/associated to the TCI state may refer to UL resources (i.e., PUCCH/PUSCH/SRS resources) for the TCI state configured/activated/indicated by RRC/MAC CE/DCI. The TCI state indicated by DCI may include first/second indicated TCI state related to first/second CORESETPoolIndex in the extended unified TCI framework for Rel-18 M-TRP operation.

For example, when the TAT of the specific TAG among the two TAGs configured within the CC/BWP expires, the UE may perform a clear operation on DL resources (e.g., configured DL assignment) related/associated to the TCI state associated with the specific TAG. The TCI state associated with the specific TAG may refer to a TCI state configured with an ID of the specific TAG via RRC signaling. The TCI state may include a DL/UL joint TCI state and/or a UL TCI state.

The DL resources related/associated to the TCI state may refer to DL resources (i.e., PDCCH/PDSCH/CSI-RS resources) for the TCI state configured/activated/indicated by RRC/MAC CE/DCI. The following methods for the operations may be considered.

According to an embodiment, a TAG ID (related to two TAs) for a DL TCI state in separate DL/UL TCI state configuration may be configured (via RRC/MAC CE signaling).

According to an embodiment, a correlation between a DL TCI state and a UL TCI state in separate DL/UL TCI state configuration may be defined/configured by higher layer signaling (e.g., RRC, MAC). That is, since a TAG ID is not configured for the DL TCI state, the above-described clear operation may be performed depending on which TAG ID is configured for the UL TCI state with the correlation with the DL TCI state.

Specifically, when a TAT related to a specific TAG expires, the DL TCI state may be determined based on the UL TCI state configured with the corresponding TAG ID. The DL TCI state may be a DL TCI state related/associated with the UL TCI state. DL resources related/associated with the DL TCI state may be cleared.

The correlation between the DL TCI state and the UL TCI state may include a correlation between DL/UL TCI states. Specifically, two DL TCI states and two UL TCI states (for M-TRP) may be updated for separate DL/UL TCI state management based on DCI. The correlation may be defined/configured between the two DL TCI states and the two UL TCI states. For example, the correlation may be defined/configured as follows.

A first indicated DL TCI state may be linked to a first indicated UL TCI state. A second indicated DL TCI state may be linked to a second indicated UL TCI state.

According to the above-described embodiments, the following effects are obtained.

If the UE enters an out-of-synch phase with a specific TAG/TRP due to expiration of a TAT related to the TAG/TRP, the UE can (explicitly) release/clear the DL/UL resources related to the TAG/TRP without ambiguity.

According to an embodiment, as another example of the method of linking the DL resources and the TAG IDs in the proposal 2, the following method may be considered.

Rather than defining the association for TAG or/and DL/UL TCI state and DL physical channel(s)/signal(s) from a layer 1 perspective, a method of distinguishing 'DL assignment' from a layer 2 or higher layer perspective may be considered.

Specifically, when a base station performs DL assignment for PDSCH scheduling, the base station may perform the following operation. The base station may include TRP ID, CORESET pool index, and/or TAG ID in a header of a user plain DL data packet (e.g., MAC, PDCP, RLC header, etc.) which is a higher layer message. Through this, the UE can determine that a specific DL assignment is associated/related to which TRP/TAG ID. Based on the correlation between the DL assignment and the TRP/TAG ID, the UE may perform the clear operation on the 'configured downlink assignments' related to the TAG/TRP when the TAT of the specific TAG expires.

Considering the previously defined operations (e.g., Table 6), the operations of the proposals 1 and 2 may be applied as in the following 1) to 3).

1) If configuration of two TAGs within a specific CC/BWP is PTAG + STAG, when a TAT related to the PTAG expires, the UE may operate as follows. Since the PTAG has expired, the UE may perform the out-of-sync operation on all serving cells. Specifically, the UE may operate based on Table 7 below.

[Table 7]

| 1> when a timeAlignmentTimer expires: |
|---|
| 2> if the timeAlignmentTimer is associated with the PTAG: |
| 3> flush all HARQ buffers for all Serving Cells; |
| 3> notify RRC to release PUCCH for all Serving Cells, if configured; |
| 3> notify RRC to release SRS for all Serving Cells, if configured; |
| 3> clear any configured downlink assignments and configured uplink grants; |
| 3> clear any PUSCH resource for semi-persistent CSI reporting; |
| 3> consider all running timeAlignmentTimers as expired; |
| 3> maintain NTA (defined in TS 38.211 [8]) of all TAGs. |

2) If configuration of two TAGs within a specific CC/BWP is PTAG + PTAG, when a TAT related to the PTAG expires, the UE may operate as follows. Since the other PTAG is maintained in the CC/BWP, the UE does not perform the out-of-sync operation on all serving cells. That is, the UE performs the out-of-sync operation on some DL/UL resources. Specifically, the UE may operate based on Table 8 below.

[Table 8]

| 1> when a timeAlignmentTimer expires: |
|---|
| 2> if the timeAlignmentTimer is associated with the PTAG: |
| 3> flush HARQ buffers associated with the PTAG for all Serving Cells; |
| 3> notify RRC to release PUCCH associated with the PTAG for all Serving Cells, if configured; |
| 3> notify RRC to release SRS associated with the PTAG for all Serving Cells, if configured; |
| 3> clear any configured downlink assignments and configured uplink grants associated with the PTAG; |
| 3> clear any PUSCH resource associated with the PTAG for semi-persistent CSI reporting; |
| 3> maintain NTA (defined in TS 38.211 [8]) of this TAGs. |

3) If configuration of two TAs within a specific CC/BWP is PTAG + STAG/STAG + STAG, when a TAT related to the STAG expires, the UE may operate as follows. Since the other TAG is maintained in the CC/BWP, the UE does not perform the out-of-sync operation on all serving cells related to the STAG. That is, the UE performs the out-of-sync operation on some DL/UL resources. Specifically, the UE may operate based on Table 9 below.

[Table 9]

| 1> when a timeAlignmentTimer expires: |
|---|
| ... |
| 2> else if the timeAlignmentTimer is associated with an STAG, then for all Serving Cells belonging to this TAG: |
| 3> flush HARQ buffers associated with the STAG; |
| 3> notify RRC to release PUCCH associated with the STAG, if configured; |
| 3> notify RRC to release SRS associated with the STAG, if configured; |
| 3> clear any configured downlink assignments and configured uplink grants associated with the STAG; |
| 3> clear any PUSCH resource associated with the STAG for semi-persistent CSI reporting; |
| 3> maintain NTA (defined in TS 38.211 [8]) of this TAG. |

For example, the proposals 1 and 2 may be extended and applied to a baseline feature in which a one-to-one correspondence between a COREST pool index and a TAG ID is clear during two TA operation. According to the baseline feature, the UE expects that a UL/joint TCI state of a UL signal/channel associated with one CORESET pool index corresponds to one TAG. As a specific example, considering the correlation between the TAG and the TCI state, the configuring/linking/mapping of the proposal 1 may be performed based on the TCI state associated with one CORESET pool index.

For example, the proposals 1 and 2 may be extended and applied to an optional feature in which two TAGs are managed for a specific CORESET pool index. According to the optional feature, the UE may support and report that a UL/joint TCI state of a UL signal/channel associated with one CORESET pool index corresponds to two TAGs.

The embodiments can operate based on combinations of specific embodiments.

An example of the UE (base station) operation based on at least one of the above-described embodiments (e.g., at least one of the proposals 1 and 2 and the additional embodiment) is as follows.

1) A UE (a base station) receives (transmits) a configuration related to two TAGs (two TAs) in a specific serving cell.

The configuration may include a correlation between TAG IDs and UL resources.

Before/after the configuration, two TA acquisition (using PDCCH ordered CFRA) for each TAG may be performed.

2) The UE (the base station) receives (transmits) a message that schedules uplink transmission related to the two TAGs.

The message may be based on RRC message, MAC CE, or DCI.

3) The UE (the base station) transmits (receives) an uplink signal based on the message.

4) Based on a TAT related to a specific TAG among the two TAGs expiring, an out-of-synch operation (e.g., TRP-level or cell-level operation) based on the proposals 1 and 2 and the additional embodiment may be performed.

The UE/base station operation is merely an example, and each operation (or step) is not necessarily essential. When the TAT related to a specific TAG among the two TAGs of the UE according to the above-described embodiments expires, the operations may be omitted or added depending on the UE/base station implementation method.

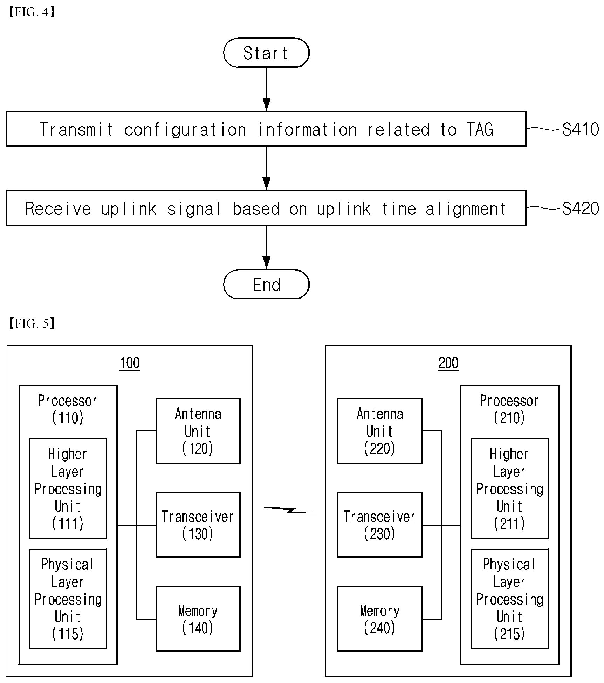

From an implementation perspective, operations of the UE/base station according to the above-described embodiments (e.g., operations based on at least one of the proposals 1 and 2 and the additional embodiment) can be processed by a device (e.g., processors 110 and 210 of FIG. 5) of FIG. 5 described below.

Further, the operations of the UE/base station according to the above-described embodiments (e.g., operations based on at least one of the proposals 1 and 2 and the additional embodiment) can be stored in a memory (e.g., memories 140 and 240 of FIG. 5) in the form of commands/programs (e.g., instructions, executable codes) for running at least one processor (e.g., processors 110 and 210 of FIG. 5).

Below, the above-described embodiments are described in detail from a UE/base station operation perspective with reference to FIGS. 3 and 4. Methods described below are merely distinguished for convenience of explanation. Thus, it is obvious that partial configuration of any method can be substituted or combined with partial configuration of another method.

FIG. 3 is a flowchart illustrating a method performed by a user equipment according to an embodiment of the present disclosure.

Referring to FIG. 3, a method performed by a user equipment (UE) according to an embodiment of the present disclosure comprises a step S310 of receiving configuration infiormatuon related to a TAG and a step S320 of transmitting an uplink signal based on uplink time alignment.

In the step S310, the UE receives configuration infiormatuon related to a timing advance group (TAG) from a base station. A time alignment timer (TAT) related to the TAG may be configured based on the configuration information. For example, the TAG may include multiple TAGs (e.g., two TAGs related to a serving cell). The time alignment timer may be configured for each of the multiple TAGs. For example, the configuration information may be based on a higher layer parameter TAG-Config.

In the step S320, the UE transmits an uplink signal to the base station based on uplink time alignment related to the time alignment timer.

For example, the uplink signal may be a Physical Uplink Shared Channel (PUSCH), a Physical Uplink Control Channel (PUCCH), or a Sounding Reference Signal (SRS).

For example, the TAG may include two TAGs related to a serving cell.

Based on the time alignment timer related to one of the two TAGs expiring and the time alignment timer related to the other TAG being running, operations for maintenance of the uplink time alignment may be performed. The operations may be based on Table 8 and at least one of the proposals 1 and 2. This is described in detail below.

According to an embodiment, the operations may include a flush operation for at least one Hybrid Automatic Repeat reQuest (HARQ) buffer. The present embodiment may be based on the proposal 1. The at least one HARQ buffer may be related to the TAG of the expired time alignment timer.

For example, the at least one HARQ buffer may be related to at least one HARQ process ID.

For example, the at least one HARQ process ID may be related to a Transmission Configuration Indicator (TCI) state. The TCI state may be related to the TAG of the expired time alignment timer.

For example, HARQ process IDs based on the number of HARQ processes (e.g., 16 HARQ processes) may include i) first HARQ process IDs (e.g., HARQ process IDs 0 to 7) related to a first TCI state, and ii) second HARQ process IDs (e.g., HARQ process IDs 8 to 15) related to a second TCI state. The TCI state may be the first TCI state or the second TCI state. The first TCI state may be related to a first COntrol REsource SET (CORESET) pool index. The second TCI state may be related to a second CORESET pool index.

According to an embodiment, the operations may include a clear operation related to the TAG of the expired time alignment timer. The present embodiment may be based on the proposal 2.

For example, the TAG of the expired time alignment timer may be associated with a Transmission Configuration Indicator (TCI) state. Specifically, the TCI state may be a UL TCI state which is configured to be associated with a DL TCI state. The DL TCI state may be related to a configured downlink assignment.

For example, the TAG of the expired time alignment timer may be related to a header of a higher layer message. The clear operation may be performed on the configured downlink assignment based on the higher layer message. The higher layer message may mean the user plain DL data packet described above.

For example, the clear operation may be related to at least one of i) the configured downlink assignment, ii) a configured uplink grant, and/or iii) a PUSCH resource for semi-persistent CSI reporting.

The operations based on the steps S310 and S320 described above may be implemented by a device of FIG. 5. For example, a UE 200 may control one or more transceivers 230 and/or one or more memories 240 so as to perform the operations based on the steps S310 and S320.

Below, the above-described embodiments are described in detail from a perspective of base station operation.

Steps S410 and S420 described below correspond to the steps S310 and S320 described with reference to FIG. 3. Considering the above correspondence, redundant description is omitted. That is, the detailed description of the base station operation described below can be replaced with the description/embodiment of FIG. 3 corresponding to the base station operation.

FIG. 4 is a flowchart illustrating a method performed by a base station according to another embodiment of the present disclosure.

Referring to FIG. 4, a method performed by a base station according to another embodiment of the present disclosure comprises a step S410 of transmitting configuration infiormatuon related to a TAG and a step S420 of receiving an uplink signal based on uplink time alignment.

In the step S410, the base station transmits configuration infiormatuon related to a timing advance group (TAG) to a UE. A time alignment timer (TAT) related to the TAG may be configured based on the configuration information. For example, the TAG may include multiple TAGs (e.g., two TAGs related to a serving cell). The time alignment timer may be configured for each of the multiple TAGs. For example, the configuration information may be based on a higher layer parameter TAG-Config.

In the step S420, the base station receives an uplink signal from the UE based on uplink time alignment related to the time alignment timer.

The operations based on the steps S410 and S420 described above may be implemented by a device of FIG. 5. For example, a base station 100 may control one or more transceivers 130 and/or one or more memories 140 so as to perform the operations based on the steps S410 and S420.

A device to which an embodiment of the present disclosure is applicable (a device implementing the method/operation according to an embodiment of the present disclosure) is described below with reference to FIG. 5.

FIG.5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE), the method comprising:

> receiving configuration information related to a Timing Advance Group (TAG), wherein a time alignment timer related to the TAG is configured based on the configuration information; and
> transmitting an uplink signal based on uplink time alignment related to the time alignment timer,
> wherein the TAG includes two TAGs related to a serving cell,
> wherein, based on that the time alignment timer related to one of the two TAGs expires and the time alignment timer related to the other TAG is running:
>
>> operations for maintenance of the uplink time alignment are performed,

wherein the operations include a flush operation for at least one Hybrid Automatic Repeat Request (HARQ) buffer,
wherein the at least one HARQ buffer is related to the TAG of the expired time alignment timer.

2. The method of claim 1, wherein the at least one HARQ buffer is related to at least one HARQ process ID.

3. The method of claim 2, wherein the at least one HARQ process ID is related to a Transmission Configuration Indicator (TCI) state, and
wherein the TCI state is related to the TAG of the expired time alignment timer.

4. The method of claim 3, wherein HARQ process IDs based on the number of HARQ processes include i) first HARQ process IDs related to a first TCI state, and ii) second HARQ process IDs related to a second TCI state, and
wherein the TCI state is the first TCI state or the second TCI state.

5. The method of claim 4, wherein the first TCI state is related to a first COntrol REsource SET (CORESET) pool index, and the second TCI state is related to a second CORESET pool index.

6. The method of claim 1, wherein the operations include a clear operation related to the TAG of the expired time alignment timer.

7. The method of claim 6, wherein the TAG of the expired time alignment timer is associated with a Transmission Configuration Indicator (TCI) state.

8. The method of claim 7, wherein the TCI state is a UL TCI state which is configured to be associated with a DL TCI state, and
wherein the DL TCI state is related to a configured downlink assignment.

9. The method of claim 6, wherein the TAG of the expired time alignment timer is related to a header of a higher layer message, and
wherein the clear operation is performed on a configured downlink assignment based on the higher layer message.

10. The method of claim 6, wherein the clear operation is related to at least one of i) a configured downlink assignment, ii) a configured uplink grant, and/or iii) a PUSCH resource for semi-persistent CSI reporting.

11. A user equipment (UE) comprising:

   one or more transceivers;
   one or more processors; and
   one or more memories connected to the one or more processors and storing instructions,
   wherein the instructions, based on being executed by the one or more processors, configure the one or more processors to perform all steps of a method according to any one of claims 1 to 10.

12. A device comprising:

   one or more memories; and
   one or more processors operably connected to the one or more memories,
   wherein the one or more memories store instructions that, based on being executed by the one or more processors, configure the one or more processors to perform all steps of a method according to any one of claims 1 to 10.

13. One or more non-transitory computer readable mediums storing instructions,
wherein the instructions executable by one or more processors configure one or more processors to perform all steps of a method according to any one of claims 1 to 10.

14. A method performed by a base station, the method comprising:

   transmitting configuration information related to a Timing Advance Group (TAG), wherein a time alignment timer related to the TAG is configured based on the configuration information; and

receiving an uplink signal based on uplink time alignment related to the time alignment timer,

wherein the TAG includes two TAGs related to a serving cell,

wherein, based on that the time alignment timer related to one of the two TAGs expires and the time alignment timer related to the other TAG is running:

operations for maintenance of the uplink time alignment are performed,

wherein the operations include a flush operation for at least one Hybrid Automatic Repeat Request (HARQ) buffer,

wherein the at least one HARQ buffer is related to the TAG of the expired time alignment timer.

15. A base station comprising:

one or more transceivers;

one or more processors; and

one or more memories connected to the one or more processors and storing instructions,

wherein the instructions, based on being executed by the one or more processors, configure the base station to perform all steps of a method according to claim 14.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| | | |
|---|---|---|
| TAG ID | Timing Advance Command | Oct 1 |

【FIG. 3】

Start

↓

Receive configuration information related to TAG — S310

↓

Transmit uplink signal based on uplink time alignment — S320

↓

End

【FIG. 4】

```
                    ┌──────────────┐
                    │    Start     │
                    └──────┬───────┘
                           │
                           ▼
┌─────────────────────────────────────────────────────────┐
│ Transmit configuration information related to TAG        │──S410
└─────────────────────────────────────────────────────────┘
                           │
                           ▼
┌─────────────────────────────────────────────────────────┐
│ Receive uplink signal based on uplink time alignment     │──S420
└─────────────────────────────────────────────────────────┘
                           │
                           ▼
                    ┌──────────────┐
                    │     End      │
                    └──────────────┘
```

【FIG. 5】

## INTERNATIONAL SEARCH REPORT

| International application No. |
| --- |
| **PCT/KR2024/095940** |

**A. CLASSIFICATION OF SUBJECT MATTER**

**H04W 72/231**(2023.01)i; **H04B 7/06**(2006.01)i; **H04W 72/232**(2023.01)i; **H04W 72/0453**(2023.01)i; **H04B 7/0413**(2017.01)i; **H04W 56/00**(2009.01)i

According to International Patent Classification (IPC) or to both national classification and IPC

**B. FIELDS SEARCHED**

Minimum documentation searched (classification system followed by classification symbols)

H04W 72/231(2023.01); H04L 1/18(2006.01); H04L 27/26(2006.01); H04L 5/00(2006.01); H04W 24/10(2009.01); H04W 72/04(2009.01); H04W 72/12(2009.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: uplink(UL), multiple, TAG(timing advance group), TAT(time alignment timer), expire, running, flush, clear

**C. DOCUMENTS CONSIDERED TO BE RELEVANT**

| Category* | Citation of document, with indication, where appropriate, of the relevant passages | Relevant to claim No. |
| --- | --- | --- |
| X | US 9301183 B2 (INTEL CORPORATION) 29 March 2016 (2016-03-29) See column 2, lines 22-23 and column 11, lines 37-43; and claims 6 and 8. | 1,11-15 |
| Y | | 2 |
| A | | 3-10 |
| Y | KR 10-2021-0083355 A (FG INNOVATION COMPANY LIMITED) 06 July 2021 (2021-07-06) See paragraph [0024]. | 2 |
| A | US 2021-0367817 A1 (OFINNO, LLC) 25 November 2021 (2021-11-25) See paragraphs [0202]-[0291]; and figures 19-26. | 1-15 |
| A | US 2015-0098400 A1 (LG ELECTRONICS INC.) 09 April 2015 (2015-04-09) See paragraphs [0118]-[0131]; and figures 14-16. | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 November 2024** | **21 November 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

<table>
<tr><td>International application No.<br><br>**PCT/KR2024/095940**</td></tr>
</table>

**C.      DOCUMENTS CONSIDERED TO BE RELEVANT**

| Category* | Citation of document, with indication, where appropriate, of the relevant passages | Relevant to claim No. |
|---|---|---|
| A | KR 10-2017-0039666 A (QUALCOMM INCORPORATED) 11 April 2017 (2017-04-11)<br>See paragraphs [0115]-[0147]; and figures 13-17. | 1-15 |

Form PCT/ISA/210 (second sheet) (July 2022)

## INTERNATIONAL SEARCH REPORT
### Information on patent family members

International application No.

**PCT/KR2024/095940**

| Patent document cited in search report | | | Publication date (day/month/year) | Patent family member(s) | | | Publication date (day/month/year) |
|---|---|---|---|---|---|---|---|
| US | 9301183 | B2 | 29 March 2016 | CN | 104584464 | A | 29 April 2015 |
| | | | | CN | 104584464 | B | 23 February 2018 |
| | | | | CN | 104584475 | A | 29 April 2015 |
| | | | | CN | 104584475 | B | 13 February 2018 |
| | | | | CN | 104584482 | A | 29 April 2015 |
| | | | | CN | 104584482 | B | 23 February 2018 |
| | | | | CN | 104584620 | A | 29 April 2015 |
| | | | | CN | 104584620 | B | 11 May 2018 |
| | | | | CN | 104584623 | A | 29 April 2015 |
| | | | | CN | 104584623 | B | 06 November 2018 |
| | | | | CN | 104584672 | A | 29 April 2015 |
| | | | | CN | 104584672 | B | 09 April 2019 |
| | | | | CN | 104604165 | A | 06 May 2015 |
| | | | | CN | 104604165 | B | 13 April 2018 |
| | | | | CN | 104604167 | A | 06 May 2015 |
| | | | | CN | 104604167 | B | 27 October 2017 |
| | | | | CN | 104604175 | A | 06 May 2015 |
| | | | | CN | 104604175 | B | 06 February 2018 |
| | | | | CN | 104604263 | A | 06 May 2015 |
| | | | | CN | 104604263 | B | 18 September 2018 |
| | | | | CN | 104604282 | A | 06 May 2015 |
| | | | | CN | 104604282 | B | 31 December 2019 |
| | | | | CN | 104604284 | A | 06 May 2015 |
| | | | | CN | 104604284 | B | 10 August 2018 |
| | | | | CN | 104604286 | A | 06 May 2015 |
| | | | | CN | 104604286 | B | 09 October 2018 |
| | | | | CN | 104604299 | A | 06 May 2015 |
| | | | | CN | 104604299 | B | 15 February 2019 |
| | | | | CN | 104604301 | A | 06 May 2015 |
| | | | | CN | 104604301 | B | 06 September 2019 |
| | | | | CN | 104620640 | A | 13 May 2015 |
| | | | | CN | 104620640 | B | 15 January 2019 |
| | | | | CN | 104662814 | A | 27 May 2015 |
| | | | | CN | 104662814 | B | 24 April 2018 |
| | | | | CN | 104662997 | A | 27 May 2015 |
| | | | | CN | 104662997 | B | 30 March 2018 |
| | | | | CN | 104704767 | A | 10 June 2015 |
| | | | | CN | 104704767 | B | 29 May 2018 |
| | | | | CN | 104737485 | A | 24 June 2015 |
| | | | | CN | 104737485 | B | 29 May 2018 |
| | | | | CN | 104737619 | A | 24 June 2015 |
| | | | | CN | 104737619 | B | 25 December 2018 |
| | | | | CN | 104813693 | A | 29 July 2015 |
| | | | | CN | 104813693 | B | 12 October 2018 |
| | | | | CN | 104823394 | A | 05 August 2015 |
| | | | | CN | 104823394 | B | 10 August 2018 |
| | | | | CN | 104904303 | A | 09 September 2015 |
| | | | | CN | 105103590 | A | 25 November 2015 |
| | | | | CN | 105103590 | B | 14 June 2019 |
| | | | | CN | 105635949 | A | 01 June 2016 |

Form PCT/ISA/210 (patent family annex) (July 2022)

**INTERNATIONAL SEARCH REPORT**
Information on patent family members

International application No.

**PCT/KR2024/095940**

| Patent document cited in search report | Publication date (day/month/year) | Patent family member(s) | | | Publication date (day/month/year) |
|---|---|---|---|---|---|
| | | CN | 105635949 | B | 20 August 2019 |
| | | CN | 106028471 | A | 12 October 2016 |
| | | CN | 106028471 | B | 18 June 2019 |
| | | CN | 106535338 | A | 22 March 2017 |
| | | CN | 106535338 | B | 03 December 2019 |
| | | CN | 108112064 | A | 01 June 2018 |
| | | CN | 108112064 | B | 31 August 2021 |
| | | CN | 108365941 | A | 03 August 2018 |
| | | CN | 108365941 | B | 25 June 2021 |
| | | CN | 108471322 | A | 31 August 2018 |
| | | CN | 108471322 | B | 14 May 2021 |
| | | CN | 108566267 | A | 21 September 2018 |
| | | CN | 108566267 | B | 08 January 2021 |
| | | CN | 110311714 | A | 08 October 2019 |
| | | CN | 110311714 | B | 30 September 2022 |
| | | EP | 2901574 | A1 | 05 August 2015 |
| | | EP | 2901574 | A4 | 11 May 2016 |
| | | EP | 2901577 | A1 | 05 August 2015 |
| | | EP | 2901577 | A4 | 01 June 2016 |
| | | EP | 2901577 | B1 | 29 November 2017 |
| | | EP | 2901584 | A1 | 05 August 2015 |
| | | EP | 2901584 | A4 | 22 June 2016 |
| | | EP | 2901584 | B1 | 27 February 2019 |
| | | EP | 2901588 | A1 | 05 August 2015 |
| | | EP | 2901588 | A4 | 25 May 2016 |
| | | EP | 2901588 | B1 | 15 May 2019 |
| | | EP | 2901589 | A1 | 05 August 2015 |
| | | EP | 2901589 | A4 | 06 July 2016 |
| | | EP | 2901589 | B1 | 22 May 2019 |
| | | EP | 2901590 | A1 | 05 August 2015 |
| | | EP | 2901590 | A4 | 13 July 2016 |
| | | EP | 2901590 | B1 | 22 May 2019 |
| | | EP | 2901601 | A1 | 05 August 2015 |
| | | EP | 2901601 | A4 | 27 April 2016 |
| | | EP | 2901601 | B1 | 14 August 2019 |
| | | EP | 2901602 | A1 | 05 August 2015 |
| | | EP | 2901602 | A4 | 25 May 2016 |
| | | EP | 2901602 | B1 | 30 May 2018 |
| | | EP | 2901603 | A1 | 05 August 2015 |
| | | EP | 2901603 | A4 | 20 April 2016 |
| | | EP | 2901603 | B1 | 13 November 2019 |
| | | EP | 2901619 | A1 | 05 August 2015 |
| | | EP | 2901619 | A4 | 04 May 2016 |
| | | EP | 2901725 | A1 | 05 August 2015 |
| | | EP | 2901725 | A4 | 23 March 2016 |
| | | EP | 2901729 | A1 | 05 August 2015 |
| | | EP | 2901729 | A4 | 01 June 2016 |
| | | EP | 2901740 | A1 | 05 August 2015 |
| | | EP | 2901740 | A4 | 06 April 2016 |
| | | EP | 2901740 | B1 | 06 March 2019 |

Form PCT/ISA/210 (patent family annex) (July 2022)

## INTERNATIONAL SEARCH REPORT
### Information on patent family members

| | International application No. |
|---|---|
| | PCT/KR2024/095940 |

| Patent document cited in search report | Publication date (day/month/year) | Patent family member(s) | | | Publication date (day/month/year) |
|---|---|---|---|---|---|
| | | EP | 2901741 | A1 | 05 August 2015 |
| | | EP | 2901741 | A4 | 06 July 2016 |
| | | EP | 2901741 | B1 | 13 December 2017 |
| | | EP | 2901748 | A1 | 05 August 2015 |
| | | EP | 2901748 | A4 | 11 May 2016 |
| | | EP | 2901748 | B1 | 27 March 2019 |
| | | EP | 2901749 | A1 | 05 August 2015 |
| | | EP | 2901749 | A4 | 15 June 2016 |
| | | EP | 2901751 | A1 | 05 August 2015 |
| | | EP | 2901751 | A4 | 05 October 2016 |
| | | EP | 2901767 | A1 | 05 August 2015 |
| | | EP | 2901767 | A4 | 22 June 2016 |
| | | EP | 2901767 | B1 | 20 October 2021 |
| | | EP | 2901768 | A1 | 05 August 2015 |
| | | EP | 2901768 | A4 | 01 June 2016 |
| | | EP | 2901768 | B1 | 02 August 2017 |
| | | EP | 2901770 | A1 | 05 August 2015 |
| | | EP | 2901770 | A4 | 03 August 2016 |
| | | EP | 2901770 | B1 | 05 May 2021 |
| | | EP | 2901804 | A1 | 05 August 2015 |
| | | EP | 2901804 | A4 | 06 July 2016 |
| | | EP | 2901804 | B1 | 20 February 2019 |
| | | EP | 2901810 | A1 | 05 August 2015 |
| | | EP | 2901810 | A4 | 14 September 2016 |
| | | EP | 2901810 | B1 | 25 October 2017 |
| | | EP | 2901811 | A1 | 05 August 2015 |
| | | EP | 2901811 | A4 | 18 May 2016 |
| | | EP | 2901811 | B1 | 10 April 2019 |
| | | EP | 2910050 | A1 | 26 August 2015 |
| | | EP | 2910050 | A4 | 09 November 2016 |
| | | EP | 2910050 | B1 | 06 November 2019 |
| | | EP | 2918136 | A1 | 16 September 2015 |
| | | EP | 2918136 | A4 | 20 July 2016 |
| | | EP | 2918136 | B1 | 20 December 2017 |
| | | EP | 3051710 | A1 | 03 August 2016 |
| | | EP | 3051710 | B1 | 04 July 2018 |
| | | EP | 3122149 | A1 | 25 January 2017 |
| | | EP | 3226434 | A1 | 04 October 2017 |
| | | EP | 3226434 | B1 | 31 October 2018 |
| | | EP | 3247050 | A1 | 22 November 2017 |
| | | EP | 3300261 | A1 | 28 March 2018 |
| | | EP | 3300261 | B1 | 26 June 2019 |
| | | EP | 3370344 | A1 | 05 September 2018 |
| | | EP | 3370344 | B1 | 28 June 2023 |
| | | JP | 2015-527015 | A | 10 September 2015 |
| | | JP | 2015-529418 | A | 05 October 2015 |
| | | JP | 2015-530031 | A | 08 October 2015 |
| | | JP | 2015-530044 | A | 08 October 2015 |
| | | JP | 2015-530833 | A | 15 October 2015 |
| | | JP | 2015-532047 | A | 05 November 2015 |

Form PCT/ISA/210 (patent family annex) (July 2022)

## INTERNATIONAL SEARCH REPORT
### Information on patent family members

International application No.

**PCT/KR2024/095940**

| Patent document cited in search report | Publication date (day/month/year) | Patent family member(s) | | | Publication date (day/month/year) |
|---|---|---|---|---|---|
| | | JP | 2015-532072 | A | 05 November 2015 |
| | | JP | 2015-534394 | A | 26 November 2015 |
| | | JP | 2015-536096 | A | 17 December 2015 |
| | | JP | 2016-119709 | A | 30 June 2016 |
| | | JP | 2016-197876 | A | 24 November 2016 |
| | | JP | 2016-201825 | A | 01 December 2016 |
| | | JP | 2016-226041 | A | 28 December 2016 |
| | | JP | 2016-500209 | A | 07 January 2016 |
| | | JP | 2017-050884 | A | 09 March 2017 |
| | | JP | 2018-125880 | A | 09 August 2018 |
| | | JP | 5912003 | B2 | 27 April 2016 |
| | | JP | 5956689 | B2 | 27 July 2016 |
| | | JP | 5973666 | B2 | 23 August 2016 |
| | | JP | 5984277 | B2 | 06 September 2016 |
| | | JP | 5996805 | B2 | 21 September 2016 |
| | | JP | 6001788 | B2 | 05 October 2016 |
| | | JP | 6044858 | B2 | 14 December 2016 |
| | | JP | 6129974 | B2 | 17 May 2017 |
| | | JP | 6263827 | B2 | 24 January 2018 |
| | | JP | 6283382 | B2 | 21 February 2018 |
| | | JP | 6312746 | B2 | 18 April 2018 |
| | | JP | 6316361 | B2 | 25 April 2018 |
| | | JP | 6452139 | B2 | 16 January 2019 |
| | | KR | 10-1643127 | B1 | 28 July 2016 |
| | | KR | 10-1643999 | B1 | 01 August 2016 |
| | | KR | 10-1653151 | B1 | 01 September 2016 |
| | | KR | 10-1653512 | B1 | 01 September 2016 |
| | | KR | 10-1655052 | B1 | 06 September 2016 |
| | | KR | 10-1665896 | B1 | 12 October 2016 |
| | | KR | 10-1680988 | B1 | 12 December 2016 |
| | | KR | 10-1684196 | B1 | 07 December 2016 |
| | | KR | 10-1700050 | B1 | 25 January 2017 |
| | | KR | 10-1700079 | B1 | 25 January 2017 |
| | | KR | 10-1713456 | B1 | 07 March 2017 |
| | | KR | 10-1728252 | B1 | 18 April 2017 |
| | | KR | 10-1749012 | B1 | 19 June 2017 |
| | | KR | 10-1753828 | B1 | 05 July 2017 |
| | | KR | 10-1754889 | B1 | 06 July 2017 |
| | | KR | 10-1761273 | B1 | 25 July 2017 |
| | | KR | 10-1777538 | B1 | 11 September 2017 |
| | | KR | 10-1800707 | B1 | 23 November 2017 |
| | | KR | 10-1819614 | B1 | 17 January 2018 |
| | | KR | 10-1828887 | B1 | 13 February 2018 |
| | | KR | 10-1861498 | B1 | 25 May 2018 |
| | | KR | 10-1980988 | B1 | 28 August 2019 |
| | | KR | 10-2015-0032747 | A | 27 March 2015 |
| | | KR | 10-2015-0036546 | A | 07 April 2015 |
| | | KR | 10-2015-0036737 | A | 07 April 2015 |
| | | KR | 10-2015-0038336 | A | 08 April 2015 |
| | | KR | 10-2015-0038361 | A | 08 April 2015 |

Form PCT/ISA/210 (patent family annex) (July 2022)

## INTERNATIONAL SEARCH REPORT
### Information on patent family members

| International application No. |
|---|
| **PCT/KR2024/095940** |

| Patent document cited in search report | Publication date (day/month/year) | Patent family member(s) | | Publication date (day/month/year) |
|---|---|---|---|---|
| | | KR | 10-2015-0038371 A | 08 April 2015 |
| | | KR | 10-2015-0038423 A | 08 April 2015 |
| | | KR | 10-2015-0038532 A | 08 April 2015 |
| | | KR | 10-2015-0039805 A | 13 April 2015 |
| | | KR | 10-2015-0040989 A | 15 April 2015 |
| | | KR | 10-2015-0040993 A | 15 April 2015 |
| | | KR | 10-2015-0040995 A | 15 April 2015 |
| | | KR | 10-2015-0054779 A | 20 May 2015 |
| | | KR | 10-2015-0064016 A | 10 June 2015 |
| | | KR | 10-2016-0066056 A | 09 June 2016 |
| | | KR | 10-2016-0101205 A | 24 August 2016 |
| | | KR | 10-2016-0105939 A | 07 September 2016 |
| | | KR | 10-2016-0135856 A | 28 November 2016 |
| | | KR | 10-2016-0142893 A | 13 December 2016 |
| | | KR | 10-2017-0007551 A | 18 January 2017 |
| | | KR | 10-2017-0024157 A | 06 March 2017 |
| | | KR | 10-2017-0060166 A | 31 May 2017 |
| | | KR | 10-2017-0078849 A | 07 July 2017 |
| | | KR | 10-2017-0087964 A | 31 July 2017 |
| | | KR | 10-2018-0008888 A | 24 January 2018 |
| | | KR | 10-2023286 B1 | 19 September 2019 |
| | | KR | 10-2025995 B1 | 26 September 2019 |
| | | US | 10045245 B2 | 07 August 2018 |
| | | US | 10085172 B2 | 25 September 2018 |
| | | US | 10098032 B2 | 09 October 2018 |
| | | US | 10111128 B2 | 23 October 2018 |
| | | US | 10231146 B2 | 12 March 2019 |
| | | US | 10264482 B2 | 16 April 2019 |
| | | US | 10524156 B2 | 31 December 2019 |
| | | US | 10631190 B2 | 21 April 2020 |
| | | US | 11019522 B2 | 25 May 2021 |
| | | US | 11089500 B2 | 10 August 2021 |
| | | US | 11122457 B2 | 14 September 2021 |
| | | US | 11638170 B2 | 25 April 2023 |
| | | US | 11979768 B2 | 07 May 2024 |
| | | US | 2014-0092731 A1 | 03 April 2014 |
| | | US | 2014-0092742 A1 | 03 April 2014 |
| | | US | 2014-0092786 A1 | 03 April 2014 |
| | | US | 2014-0092787 A1 | 03 April 2014 |
| | | US | 2014-0092799 A1 | 03 April 2014 |
| | | US | 2014-0092808 A1 | 03 April 2014 |
| | | US | 2014-0092821 A1 | 03 April 2014 |
| | | US | 2014-0092824 A1 | 03 April 2014 |
| | | US | 2014-0092828 A1 | 03 April 2014 |
| | | US | 2014-0092833 A1 | 03 April 2014 |
| | | US | 2014-0092865 A1 | 03 April 2014 |
| | | US | 2014-0092878 A1 | 03 April 2014 |
| | | US | 2014-0092886 A1 | 03 April 2014 |
| | | US | 2014-0094119 A1 | 03 April 2014 |
| | | US | 2014-0094162 A1 | 03 April 2014 |

Form PCT/ISA/210 (patent family annex) (July 2022)

## INTERNATIONAL SEARCH REPORT
### Information on patent family members

| | International application No. |
|---|---|
| | **PCT/KR2024/095940** |

| Patent document cited in search report | Publication date (day/month/year) | Patent family member(s) | | | Publication date (day/month/year) |
|---|---|---|---|---|---|
| | | US | 2014-0094185 | A1 | 03 April 2014 |
| | | US | 2014-0095668 | A1 | 03 April 2014 |
| | | US | 2014-0095670 | A1 | 03 April 2014 |
| | | US | 2014-0095730 | A1 | 03 April 2014 |
| | | US | 2014-0369244 | A1 | 18 December 2014 |
| | | US | 2015-0092641 | A1 | 02 April 2015 |
| | | US | 2015-0195822 | A1 | 09 July 2015 |
| | | US | 2015-0215801 | A1 | 30 July 2015 |
| | | US | 2015-0223050 | A1 | 06 August 2015 |
| | | US | 2015-0223284 | A1 | 06 August 2015 |
| | | US | 2015-0289240 | A1 | 08 October 2015 |
| | | US | 2015-0305083 | A1 | 22 October 2015 |
| | | US | 2016-0029262 | A1 | 28 January 2016 |
| | | US | 2016-0080134 | A1 | 17 March 2016 |
| | | US | 2016-0088509 | A1 | 24 March 2016 |
| | | US | 2016-0128127 | A1 | 05 May 2016 |
| | | US | 2016-0157178 | A1 | 02 June 2016 |
| | | US | 2016-0212638 | A1 | 21 July 2016 |
| | | US | 2016-0278060 | A1 | 22 September 2016 |
| | | US | 2016-0366722 | A1 | 15 December 2016 |
| | | US | 2016-0374097 | A1 | 22 December 2016 |
| | | US | 2016-0381730 | A1 | 29 December 2016 |
| | | US | 2017-0026868 | A1 | 26 January 2017 |
| | | US | 2017-0041827 | A1 | 09 February 2017 |
| | | US | 2017-0150484 | A1 | 25 May 2017 |
| | | US | 2017-0347286 | A1 | 30 November 2017 |
| | | US | 2017-0374577 | A1 | 28 December 2017 |
| | | US | 2018-0027442 | A1 | 25 January 2018 |
| | | US | 2018-0192318 | A1 | 05 July 2018 |
| | | US | 2018-0302820 | A1 | 18 October 2018 |
| | | US | 2020-0137613 | A1 | 30 April 2020 |
| | | US | 2020-0314679 | A1 | 01 October 2020 |
| | | US | 2023-0018315 | A1 | 19 January 2023 |
| | | US | 8923880 | B2 | 30 December 2014 |
| | | US | 9025445 | B2 | 05 May 2015 |
| | | US | 9083775 | B2 | 14 July 2015 |
| | | US | 9107162 | B2 | 11 August 2015 |
| | | US | 9161254 | B2 | 13 October 2015 |
| | | US | 9173124 | B2 | 27 October 2015 |
| | | US | 9277440 | B2 | 01 March 2016 |
| | | US | 9288756 | B2 | 15 March 2016 |
| | | US | 9332456 | B2 | 03 May 2016 |
| | | US | 9374806 | B2 | 21 June 2016 |
| | | US | 9386486 | B2 | 05 July 2016 |
| | | US | 9386487 | B2 | 05 July 2016 |
| | | US | 9398498 | B2 | 19 July 2016 |
| | | US | 9439095 | B2 | 06 September 2016 |
| | | US | 9462555 | B2 | 04 October 2016 |
| | | US | 9497740 | B2 | 15 November 2016 |
| | | US | 9516558 | B2 | 06 December 2016 |

Form PCT/ISA/210 (patent family annex) (July 2022)

**INTERNATIONAL SEARCH REPORT**
Information on patent family members

International application No.

**PCT/KR2024/095940**

| Patent document cited in search report | | | Publication date (day/month/year) | Patent family member(s) | | | Publication date (day/month/year) |
|---|---|---|---|---|---|---|---|
| | | | | US | 9578635 | B2 | 21 February 2017 |
| | | | | US | 9591581 | B2 | 07 March 2017 |
| | | | | US | 9603095 | B2 | 21 March 2017 |
| | | | | US | 9603132 | B2 | 21 March 2017 |
| | | | | US | 9609602 | B2 | 28 March 2017 |
| | | | | US | 9629131 | B2 | 18 April 2017 |
| | | | | US | 9681326 | B2 | 13 June 2017 |
| | | | | US | 9743390 | B2 | 22 August 2017 |
| | | | | US | 9781638 | B2 | 03 October 2017 |
| | | | | US | 9843958 | B2 | 12 December 2017 |
| | | | | US | 9848351 | B2 | 19 December 2017 |
| | | | | US | 9848353 | B2 | 19 December 2017 |
| | | | | US | 9924401 | B2 | 20 March 2018 |
| | | | | US | 9942791 | B2 | 10 April 2018 |
| | | | | US | 9949164 | B2 | 17 April 2018 |
| | | | | WO | 2014-051951 | A1 | 03 April 2014 |
| | | | | WO | 2014-052048 | A1 | 03 April 2014 |
| | | | | WO | 2014-052083 | A1 | 03 April 2014 |
| | | | | WO | 2014-052084 | A1 | 03 April 2014 |
| | | | | WO | 2014-052088 | A1 | 03 April 2014 |
| | | | | WO | 2014-052096 | A1 | 03 April 2014 |
| | | | | WO | 2014-052129 | A1 | 03 April 2014 |
| | | | | WO | 2014-052155 | A1 | 03 April 2014 |
| | | | | WO | 2014-052156 | A1 | 03 April 2014 |
| | | | | WO | 2014-052175 | A1 | 03 April 2014 |
| | | | | WO | 2014-052258 | A1 | 03 April 2014 |
| | | | | WO | 2014-052268 | A1 | 03 April 2014 |
| | | | | WO | 2014-052303 | A1 | 03 April 2014 |
| | | | | WO | 2014-052338 | A1 | 03 April 2014 |
| | | | | WO | 2014-052339 | A1 | 03 April 2014 |
| | | | | WO | 2014-052375 | A1 | 03 April 2014 |
| | | | | WO | 2014-052381 | A1 | 03 April 2014 |
| | | | | WO | 2014-052730 | A1 | 03 April 2014 |
| | | | | WO | 2014-052751 | A1 | 03 April 2014 |
| | | | | WO | 2014-052774 | A1 | 03 April 2014 |
| | | | | WO | 2014-052850 | A1 | 03 April 2014 |
| | | | | WO | 2014-052877 | A1 | 03 April 2014 |
| | | | | WO | 2014-052905 | A1 | 03 April 2014 |
| | | | | WO | 2014-052955 | A1 | 03 April 2014 |
| | | | | WO | 2014-052956 | A1 | 03 April 2014 |
| KR | 10-2021-0083355 | A | 06 July 2021 | CN | 113016226 | A | 22 June 2021 |
| | | | | CN | 113016226 | B | 07 July 2023 |
| | | | | CN | 116566549 | A | 08 August 2023 |
| | | | | EP | 3878230 | A1 | 15 September 2021 |
| | | | | EP | 3878230 | A4 | 07 September 2022 |
| | | | | JP | 2022-506870 | A | 17 January 2022 |
| | | | | JP | 7124261 | B2 | 24 August 2022 |
| | | | | KR | 10-2495980 | B1 | 06 February 2023 |
| | | | | US | 11297642 | B2 | 05 April 2022 |
| | | | | US | 12108412 | B2 | 01 October 2024 |

Form PCT/ISA/210 (patent family annex) (July 2022)

**INTERNATIONAL SEARCH REPORT**
Information on patent family members

| International application No. |
| --- |
| **PCT/KR2024/095940** |

| Patent document cited in search report | | | Publication date (day/month/year) | Patent family member(s) | | | Publication date (day/month/year) |
| --- | --- | --- | --- | --- | --- | --- | --- |
| | | | | US | 2020-0154469 | A1 | 14 May 2020 |
| | | | | US | 2022-0264633 | A1 | 18 August 2022 |
| | | | | WO | 2020-094124 | A1 | 14 May 2020 |
| US | 2021-0367817 | A1 | 25 November 2021 | US | 10382238 | B2 | 13 August 2019 |
| | | | | US | 11088881 | B2 | 10 August 2021 |
| | | | | US | 11695603 | B2 | 04 July 2023 |
| | | | | US | 12101210 | B2 | 24 September 2024 |
| | | | | US | 2017-0006599 | A1 | 05 January 2017 |
| | | | | US | 2019-0372811 | A1 | 05 December 2019 |
| | | | | US | 2023-0327925 | A1 | 12 October 2023 |
| US | 2015-0098400 | A1 | 09 April 2015 | CN | 100555842 | A | 22 December 2004 |
| | | | | US | 2015-0049753 | A1 | 19 February 2015 |
| | | | | US | 9357536 | B2 | 31 May 2016 |
| | | | | US | 9578629 | B2 | 21 February 2017 |
| | | | | WO | 2013-168938 | A1 | 14 November 2013 |
| | | | | WO | 2013-169057 | A1 | 14 November 2013 |
| KR | 10-2017-0039666 | A | 11 April 2017 | CN | 106576318 | A | 19 April 2017 |
| | | | | CN | 106576318 | B | 07 April 2020 |
| | | | | EP | 3178267 | A1 | 14 June 2017 |
| | | | | EP | 3178267 | B1 | 08 April 2020 |
| | | | | JP | 2017-523722 | A | 17 August 2017 |
| | | | | JP | 2020-043592 | A | 19 March 2020 |
| | | | | JP | 6622286 | B2 | 18 December 2019 |
| | | | | JP | 6891250 | B2 | 18 June 2021 |
| | | | | KR | 10-2339312 | B1 | 13 December 2021 |
| | | | | US | 10462758 | B2 | 29 October 2019 |
| | | | | US | 11191044 | B2 | 30 November 2021 |
| | | | | US | 2016-0044617 | A1 | 11 February 2016 |
| | | | | US | 2020-0068515 | A1 | 27 February 2020 |
| | | | | WO | 2016-022668 | A1 | 11 February 2016 |

Form PCT/ISA/210 (patent family annex) (July 2022)